(19) Europäisches Patentamt
European Patent Office
Office européen des brevets

(11) **EP 4 321 848 B1**

(12) **EUROPEAN PATENT SPECIFICATION**

(45) Date of publication and mention
of the grant of the patent:
**12.11.2025 Bulletin 2025/46**

(21) Application number: **22799220.3**

(22) Date of filing: **04.05.2022**

(51) International Patent Classification (IPC):
**G01K 7/01** *(2006.01)*    **G01K 7/16** *(2006.01)*
**G01K 1/20** *(2006.01)*

(52) Cooperative Patent Classification (CPC):
**G01K 7/01; G01K 1/20;** G01K 2219/00

(86) International application number:
**PCT/SG2022/050271**

(87) International publication number:
**WO 2022/235215 (10.11.2022 Gazette 2022/45)**

(54) **TEMPERATURE MEASUREMENT CIRCUIT AND METHOD**

TEMPERATURMESSSCHALTUNG UND -VERFAHREN

CIRCUIT ET PROCÉDÉ DE MESURE DE TEMPÉRATURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.05.2021 CN 202110496105**

(43) Date of publication of application:
**14.02.2024 Bulletin 2024/07**

(73) Proprietor: **Lemon Inc.
Grand Cayman, KY1-1205 (KY)**

(72) Inventors:
 • **ZHANG, Chuang**
   **Los Angeles, California 90066 (US)**
 • **LU, Shan**
   **Los Angeles, California 90066 (US)**
 • **ZHANG, Junmou**
   **Los Angeles, California 90066 (US)**
 • **CHEN, Yimin**
   **Los Angeles, California 90066 (US)**
 • **WANG, Jian**
   **Beijing 100190 (CN)**
 • **CHENG, Yuanlin**
   **Beijing 100190 (CN)**

(74) Representative: **Marks & Clerk LLP
15 Fetter Lane
London EC4A 1BW (GB)**

(56) References cited:
   WO-A1-2011/021276    WO-A1-2011/021276
   US-A1- 2006 038 626    US-A1- 2007 160 113
   US-A1- 2012 140 792    US-A1- 2013 077 652
   US-A1- 2018 149 527

## Description

### FIELD

The disclosure relates to the technical field of temperature measurement, and particularly relates to a circuit and a method for temperature measurement.

### BACKGROUND

Temperature control of a circuit is generally required. With a high-end analog-to-digital converter (ADC), a circuit for temperature measurement is large in occupied area and difficult to route. In addition, the circuit for temperature measurement often has the shortcomings of inaccuracy in measured temperature and nonlinear performance.

A related US patent application US 2012/0140792 A1, published on Jun. 7, 2012, discloses a temperature sensing apparatus. The temperature sensing apparatus disposed inside a chip includes first and second current generation circuits, first and second current-to-frequency converters, and a counting unit. The first current generation circuit is configured to generate a first current varying proportional to the temperature of the temperature sensing apparatus. The second current generation circuit is configured to generate a second current independent of temperature. The first current-to-frequency converter is configured to generate a first frequency signal with a first frequency indicative of the first current, and the second current-to-frequency converter is configured to generate a second frequency signal with a second frequency indicative of the second current. The counting unit is configured to generate a digital signal indicative of the temperature according to the difference between the first and second frequencies.

### SUMMARY

The disclosed content is provided to introduce concepts in a simplified way, and the concepts will be described in detail in the following specific embodiments. The disclosed content is intended neither to identify key features or essential features of the claimed technical solution nor to limit the scope of the claimed technical solution.

Embodiments of the disclosure provide a circuit and a method for temperature measurement.

According to the present invention, there is provide a circuit for temperature measurements as defined in claimed 1.

According to the invention, there is provided a method as defined in claim 9.

### BRIEF DESCRIPTION OF THE DRAWINGS

What is described above and other features, advantages and aspects of embodiments of the disclosure will become more obvious with reference to the following specific embodiments in conjunction with the accompanying drawings. In the drawings, the same or similar reference numerals denote the same or similar elements. It should be understood that the drawings are illustrative, and components and elements are not necessarily drawn to scale.

FIG. 1 is a schematic structural diagram of an example of a circuit for temperature measurement not forming part of the invention as claimed;
FIG. 2 is a schematic structural diagram of a circuit for temperature measurement according to the present invention; and
FIG. 3 is a schematic flow diagram of some embodiments of a method for temperature measurement according to the disclosure.

### DETAILED DESCRIPTION OF EMBODIMENTS

Embodiments of the disclosure will be described in more detail below with reference to the accompanying drawings. Although some embodiments of the disclosure are shown in the accompanying drawings, it should be understood that the disclosure may be implemented in various forms and should not be construed as limiting to the embodiments illustrated herein. Rather, the embodiments are provided for a more thorough and complete understanding of the disclosure. It should be understood that the drawings and the embodiments of the disclosure are only for illustrative purposes, instead of limiting the protection scope of the disclosure.

It should be understood that all steps described in method embodiments of the disclosure may be executed in a different order and/or in parallel.

The terms "include" and "comprise" used herein and their variations are open-ended, that is, "including but not limited to" and "comprising but not limited to". The term "on the basis of/based on" means "at least partly on the basis of/at least partly based on". The term "an embodiment" means "at least one embodiment". The term "another embodiment" means "at least another embodiment". The term "some embodiments" means "at least some embodiments". Related definitions of other terms will be given in the following description.

It should be noted that concepts such as "first" and "second" mentioned in the disclosure are only used to distinguish different apparatuses, modules or units, and are not used to limit an order or interdependence of functions executed by the apparatuses, modules or units.

It should be noted that modification with "a", "an" or "a plurality of" mentioned in the disclosure is illustrative rather than limitative, and should be understood by those skilled in the art as "one or more" unless explicitly stated otherwise in the context.

Names of messages or information exchanged between a plurality of apparatuses in the embodiment of the disclosure are only for illustrative purposes, instead of limiting the scope of the messages or information.

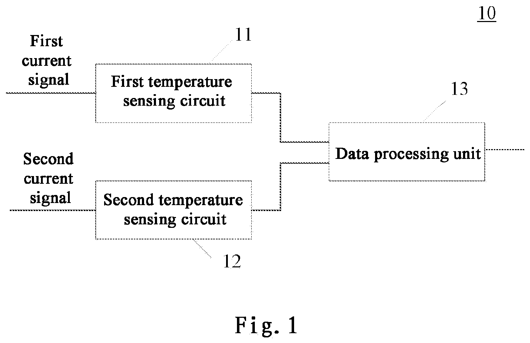

Reference is made to FIG. 1, which shows a schematic structural diagram of a circuit for temperature measurement not forming part of the claimed invention. As shown in FIG. 1, the circuit 10 for temperature measurement includes:

a first temperature sensing circuit 11, a second temperature sensing circuit 12, and a data processing unit 13.

The first temperature sensing circuit 11 is configured to generate a first measurement signal for representing temperature according to a first current signal input. The magnitude of the first current signal is correlated to temperature. The first measurement signal is correlated to temperature and a circuit parameter of the first temperature sensing circuit.

The second temperature sensing circuit 12 is configured to generate a second measurement signal configured for representing temperature according to a second current signal input. The second current signal is independent of temperature. The second measurement signal is correlated to a circuit parameter of the second temperature sensing circuit.

An output end of the first temperature sensing circuit 11 and an output end of the second temperature sensing circuit 12 are both connected to an input end of the data processing unit 13.

The data processing unit 13 is configured to determine a present temperature according to a first characteristic parameter corresponding to the first measurement signal and a second characteristic parameter corresponding to the second measurement signal. The circuit parameter of the first temperature sensing circuit is the same as the circuit parameter of the second temperature sensing circuit.

In some application scenes, the circuit for temperature measurement may be applied to the design of an integrated circuit, so as to detect a temperature of the integrated circuit during work. In the application scenes, the circuit for temperature measurement may be a circuit module for temperature detection that is fixedly arranged in the above-described integrated circuit.

The first measurement signal may be a first periodic oscillation signal. For instance, the first characteristic parameter may be a first frequency of the first periodic oscillation signal.

The second measurement signal may be a second periodic oscillation signal. For instance, the second characteristic parameter may be a second frequency of the second periodic oscillation signal.

The first frequency may be correlated to the present temperature and the circuit parameter of the first temperature sensing circuit, and the second frequency may be correlated to the circuit parameter of the second temperature sensing circuit.

The circuit parameter of the first temperature sensing circuit is the same as the circuit parameter of the second temperature sensing circuit. For instance, the same elements required by the first temperature sensing circuit and the second temperature sensing circuit may be manufactured through the same manufacturing process.

The circuit parameter of the first temperature sensing circuit 11 is the same as the circuit parameter of the second temperature sensing circuit 12. Thus, for the current signals input, an output signal generated by the circuit parameter of the first temperature sensing circuit for a first current signal input to the first temperature sensing may be approximately considered to be the same as an output signal generated by the circuit parameter of the second temperature sensing circuit for a second current signal input to the second temperature sensing circuit.

The output signal generated by the circuit parameter of the first temperature sensing circuit for a circuit signal may be removed from the first measurement signal with the second measurement signal generated by the second temperature sensing circuit for the second current signal. The remaining part of the first measurement signal is only correlated to the first current signal. The first current signal is a signal correlated to temperature. Therefore, the remaining part of the first measurement signal may also be regarded as only correlated to temperature. The temperature of an environment where the circuit for temperature measurement is located may be determined according to the remaining part of the first measurement signal.

In the circuit for temperature measurement according to the embodiment, the first temperature sensing circuit and the second temperature sensing circuit that have the same circuit parameter are arranged, and the first current signal and the second current signal are input into the first temperature sensing circuit and the second temperature sensing circuit, respectively. The magnitude of the first current signal is correlated to temperature, and the magnitude of the second current signal is independent of temperature. Influence of the circuit parameter of the first temperature sensing circuit in the first measurement signal output from the first temperature sensing circuit may be eliminated with the second measurement signal output from the second temperature sensing circuit, such that linearity of the measurement result of the circuit for temperature measurement can be improved according to the temperature obtained by the circuit for temperature measurement, and meanwhile, the accuracy of the temperature measurement result can be enhanced.

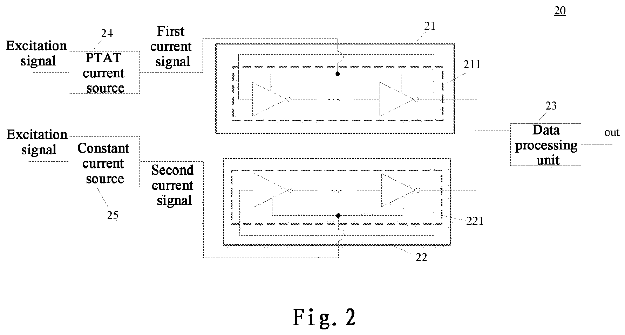

Reference is made to FIG. 2, which shows a schematic structural diagram of a circuit for temperature measurement according to the present invention.

Compared with the example shown in FIG. 1, a circuit 20 for temperature measurement includes a first temperature sensing circuit 21, a second temperature sensing circuit 22, a data processing unit 23, a proportional to absolute temperature (PTAT) current source 24, and a constant current source 25 as shown in FIG. 2.

The proportional to absolute temperature (PTAT) current source 24 refers to a current source having a proportional relation between the magnitude of an output current and an absolute temperature (in unit: kelvin).

That is, a relation between the magnitude of a current I (in unit: ampere) output from the PTAT current source 24 and a temperature T (in unit: kelvin) of the environment where the PTAT current source 24 is located satisfies I=A×T (A is a fixed constant). The current output from the PTAT current source 24 may be regarded as a PTAT current. An implementation circuit of the PTAT current source 24 herein may be an implementation circuit of various existing PTAT current sources.

In some application scenes, when the circuit for temperature measurement is applied to the field of measuring an integrated circuit, the PTAT current source 24 may be arranged in the integrated circuit. The PTAT current source 24 may be arranged in the integrated circuit in the form of a sub-circuit as a core unit of a temperature sensor. Its output current is proportional to the absolute temperature. In this way, the present environmental temperature may be reflected by the magnitude of the current output from the PTAT current source 24 through some mechanism.

The PTAT current source 24 is configured to generate a first current signal having a magnitude that changes with temperature.

An output end of the PTAT current source 24 is connected to an input end of the first temperature sensing circuit, so as to input the first current signal into the first temperature sensing circuit.

The constant current source 25 is composed of the PTAT current source and a complementary to absolute temperature (CTAT) circuit. The CTAT circuit is a circuit generating a negative temperature coefficient. That is, the magnitude of the current generated by the circuit is negatively correlated to temperature. According to the present invention, the constant current source is composed of the PTAT current source 24 and a CTAT circuit. For instance, the first current signal output from the PTAT current source is input into the CTAT circuit, and the CTAT circuit outputs the second current signal that does not change with temperature.

Various existing CTAT implementation circuits may be used as the CTAT circuit in the embodiment.

The PTAT current source 24 outputs the first current signal that is positively correlated to temperature under the excitation of a voltage signal.

The CTAT circuit outputs a calibration current signal that is negatively correlated to temperature and is used for calibration under excitation of the voltage signal.

A first weight and a second weight are assigned to the calibration current signal and the first current signal, respectively. The second current signal is determined according to a product of a calibration signal and the first weight and a product of the first current signal and the second weight. According to the invention, the sum of the product of the calibration signal and the first weight and the product of the first current signal and the second weight is regarded as the second current signal.

A constant current signal (the second current signal) having a current that does not change with temperature may be obtained by means of the PTAT current source 24 and the CTAT circuit.

The second temperature sensing circuit may be a replication of the first temperature sensing circuit. Specifically, the second temperature sensing circuit may have the same circuit structure as the first temperature sensing circuit. Each element used in the circuit structure of the second temperature sensing circuit may have the same element parameter as the corresponding element in the circuit structure of the first temperature sensing circuit.

In the embodiment, the first temperature sensing circuit 21 includes a first ring oscillator 211. The second temperature sensing circuit 22 includes a second ring oscillator 221. A signal input end of the first ring oscillator 211 is connected to the output end of the PTAT current source 24. A signal input end of the second ring oscillator 221 is connected to the output end of the constant current signal source 25.

The first ring oscillator 211 and the second ring oscillator 221 may each include an odd number of phase inverters. The first ring oscillator 211 and the second ring oscillator 221 each include an equal number of phase inverters. Further, each phase inverter in the first ring oscillator may have the same parameter as the corresponding phase inverter in the second ring oscillator. The parameter of the phase inverter herein may include capacitance, for example.

The first ring oscillator 211 may generate a first oscillation current signal according to the first current signal input. The first oscillation current signal herein may be a first measurement signal. The first oscillation current signal is a first periodic pulse signal. The frequency of the first periodic pulse signal may be correlated to the magnitude of the first current signal.

The second ring oscillator 221 may generate a second oscillation current signal according to the second current signal input. The second oscillation current signal herein may be a second measurement signal. The oscillation frequency of the second oscillation current signal is correlated to the second current signal.

The second current signal may be generated by the constant current source 25. In some application scenes, the signal input end of the PTAT current source 24 and the signal input end of constant current source 25 may be input with the same excitation signal. In some other application scenes, the PTAT current source that constitutes the constant current source may be a replication of the PTAT current source generating the first current signal.

In some other application scenes, the constant current source may be composed of the PTAT current source generating the first current signal and a CTAT circuit. That is, in the application scenes, the second current signal may be generated after the first current signal flows through the CTAT circuit.

In the above two application scenes, relations between the second current signal and the first current signal are as follows:

The first current signal generated by the PTAT current source may be denoted as Iptat. The current signal generated by the constant current source may be denoted as Iabs.

$$Iptat = a \times T \quad (1),$$

where

a is a constant and T is an absolute temperature.

A relation between the second current signal and the first current signal may be indicated by the following formula:

$$Iabs = Iptat + \Delta Iptat \quad (2),$$

where

$\Delta Iptat$ is a difference between Iptat and Iabs. Since Iabs does not change with temperature, and Iptat changes with temperature, $\Delta Iptat$ changes with temperature.

A first characteristic parameter (that is, a first oscillation frequency) of the first measurement signal output from the first ring oscillator 211 under the action of the first current signal may be:

$$F1 = Fabs + b \times \Delta Iptat \quad (3),$$

where

b herein is a constant.

A second characteristic parameter (that is, a second oscillation frequency) of the second measurement signal output from the second ring oscillator 221 under the action of the second current signal may be Fabs.

$$F2 = Fabs \quad (4).$$

Formula (4) may be subtracted from formula (3), such that a temperature measurement frequency F3 is obtained as follows:

$$F3 = F1 - F2 = b \times \Delta Iptat = b \times a' \times T = b' \times T \quad (5),$$

where

the temperature is determined through formula (5), such that the influence of the circuit parameters in the ring oscillators on results may be eliminated. In this way, the linearity of a test result can be improved.

In practice, a relation curve between the temperature and temperature measurement frequency F3 may be calibrated according to formula (5), such that a value of $b'$ is determined. During an actual measurement of the temperature, the present temperature T may be determined according to the temperature measurement frequency F3 output from the circuit for temperature measurement.

In the circuit for temperature measurement according to the embodiment, the PTAT current source and the constant current source are arranged in the circuit for temperature measurement, a PTAT current is input into the first ring oscillator such that the first measurement signal is obtained, and the second current signal output from the constant current source is input into the second ring oscillator such that the second measurement signal is obtained. The first oscillation frequency is determined according to the first measurement signal, and the second oscillation frequency is determined according to the second measurement signal. The temperature measurement frequency only correlated to temperature is extracted from the first oscillation frequency with the second oscillation frequency, and the temperature is determined with the temperature measurement frequency, such that a more accurate measurement result may be obtained.

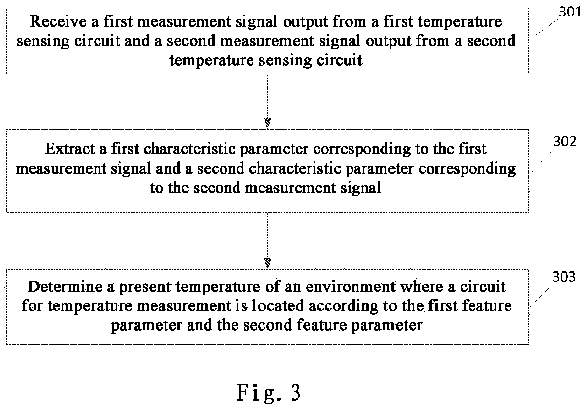

FIG. 3 shows a schematic flow diagram of some embodiments of a method for temperature measurement according to the disclosure. The method for temperature measurement is configured for a data processing unit in the circuit for temperature measurement as shown in FIG. 1.

The circuit for temperature measurement includes a first temperature sensing circuit and a second temperature sensing circuit. The method for temperature measurement includes the following steps:
Step 301, a first measurement signal output from the first temperature sensing circuit and a second measurement signal output from the second temperature sensing circuit are received.

An input signal to the first temperature sensing circuit is the first current signal, and a magnitude of the first current signal is correlated to temperature. The first measurement signal is correlated to both the temperature and a circuit parameter of the first temperature sensing circuit.

An input signal to the second temperature sensing circuit is the second current signal, and the second current signal is independent of temperature. The second measurement signal is correlated to a circuit parameter of the second temperature sensing circuit.

The first temperature sensing circuit has the same corresponding circuit parameter as the second temperature sensing circuit.

Step 302, a first characteristic parameter corresponding to the first measurement signal and a second characteristic parameter corresponding to the second measurement signal are extracted.

Step 303, a present temperature of an environment where the circuit for temperature measurement is located is determined according to the first characteristic parameter and the second characteristic parameter.

Specifically, a part that is the same as the second characteristic parameter may be extracted from the first characteristic parameter, and the present temperature of the environment where the circuit for temperature measurement is located is determined according to a remaining part of the characteristic parameter.

The remaining part of the characteristic parameter herein is only correlated to temperature.

In some application scenes, the circuit for temperature measurement includes a PTAT current source and a constant current source. The first temperature sensing circuit includes a first ring oscillator, and the second temperature sensing circuit includes a second ring oscillator. A signal input end of the first ring oscillator is connected to an output end of the PTAT current source. A signal input end of the second ring oscillator is connected to an output end of the constant current source.

The first ring oscillator and the second ring oscillator each include an equal number of phase inverters. The first ring oscillator and the second ring oscillator each include an odd number of phase inverters. The second ring oscillator may be a mirror of the first ring oscillator.

The phase inverter corresponding to the first ring oscillator has the same parameter as the phase inverter corresponding to the second ring oscillator.

The first measurement signal may be a first periodic oscillation signal output from the first ring oscillator. The second measurement signal may be a second periodic oscillation signal output from the second ring oscillator. The first periodic oscillation signal is a periodic pulse signal. The second periodic oscillation signal is also a periodic pulse signal. Step 302 may include the following: a first oscillation frequency is extracted as the first characteristic parameter from the first measurement signal; and a second oscillation frequency is extracted as the second characteristic parameter from the second measurement signal.

The first oscillation frequency may be correlated to temperature and a circuit parameter of the first ring oscillator.

The second oscillation frequency is correlated to a circuit parameter of the second ring oscillator.

A circuit parameter of the first ring oscillator is the same as a circuit parameter of the second ring oscillator. The first ring oscillator and the second ring oscillator each include an equal number of phase inverters. The first ring oscillator and the second ring oscillator each include an odd number of phase inverters.

In the application scenes, Step 303 further includes the following steps:

first, a part of characteristic parameters only correlated to temperature is extracted from the first characteristic parameter with the second characteristic parameter; and

then, the present temperature is determined according to the part of characteristic parameters only correlated to temperature.

Specifically, the first current signal generated by the PTAT current source may be denoted as Iptat. The current signal generated by the constant current source may be denoted as Iabs.

$$Iptat = a \times T \quad (6),$$

where
a is a constant and T is an absolute temperature.

A relation between the second current signal and the first current signal may be indicated by the following formula:

$$Iabs = Iptat + \Delta Iptat \quad (7),$$

where
$\Delta Iptat$ is a difference between Iptat and Iabs. Since Iabs does not change with temperature, and Iptat changes with temperature, $\Delta Iptat$ changes with temperature.

A first characteristic parameter (a first oscillation frequency) of the first measurement signal output from the first ring oscillator under the action of the first current signal may be:

$$F1 = Fabs + b \times \Delta Iptat \quad (8),$$

where
b herein is a constant.

A second characteristic parameter (a second oscillation frequency) of the second measurement signal output from the second ring oscillator under the action of the second current signal may be Fabs.

$$F2 = Fabs \quad (9);$$

Formula (9) may be subtracted from formula (8), such that a temperature measurement frequency F3 is obtained as follows:

$$F3 = F1 - F2 = b \times \Delta Iptat = b \times a' \times T = b' \times T \quad (10);$$

the temperature is determined through formula (10), such that the influence of the circuit parameters in the ring oscillators on results may be eliminated. In this way, the linearity of a test result can be improved.

In practice, a relation curve between the temperature and temperature measurement frequency F3 may be calibrated according to formula (10), such that a value of *b'* is determined. During an actual measurement of the temperature, the present temperature T of the environment where the circuit for temperature measurement is located may be determined according to the temperature measurement frequency output from the circuit for temperature measurement.

What are described above are merely illustrative of preferred embodiments of the disclosure and principles of the technology employed.

Further, although operations are depicted in a particular order, it should be understood that the operations are not required to be executed in the particular order shown or in a sequential order. In some cases, multitasking and parallel processing may be advantageous.

Although the subject is described in languages of specific structural features and/or methodological logic actions, it should be understood that the subject defined in the appended claims is not necessarily limited to the specific features or actions described above. On the contrary, the specific features and actions described above are merely illustrative forms for implementing the claims.

**Claims**

1. A circuit (10, 20) for temperature measurement, comprising: a first temperature sensing circuit (11,21), a second temperature sensing circuit (12,22), and a data processing unit,

the first temperature sensing circuit (11,21) is configured to generate a first measurement signal for representing temperature according to a first current signal input, and a magnitude of the first current signal is correlated to temperature;

the second temperature sensing circuit is configured to generate a second measurement signal for representing temperature according to a second current signal input, and the second current signal is independent of temperature;

an output end of the first temperature sensing circuit (11,21) and an output end of the second temperature sensing circuit (12,22) are both connected to an input end of the data processing unit (13,23); and

the data processing unit (13,23) is configured to determine a present temperature according to a first characteristic parameter corresponding to the first measurement signal and a second characteristic parameter corresponding to the second measurement signal, wherein

a circuit parameter of the first temperature sensing circuit (11,21) is the same as a circuit parameter of the second temperature sensing circuit (12,22),

wherein the circuit further comprises a constant current source (25), and the constant current source (25) is composed of a proportional to absolute temperature, PTAT, current source (24) and a complementary to absolute temperature, CTAT, circuit, and the PTAT current source (24) outputs the first current signal, and the CTAT circuit outputs a calibration current signal, and a first weight and a second weight are assigned to the calibration current signal and the first current signal respectively, and the second current signal is determined according to a product of a calibration signal and the first weight and a product of the first current signal and the second weight.

2. The circuit for temperature measurement according to claim 1, wherein the first measurement signal is correlated to temperature and the circuit parameter of the first temperature sensing circuit (11,21); and
the second measurement signal is correlated to the circuit parameter of the second temperature sensing circuit (12,22).

3. The circuit for temperature measurement according to claim 1, wherein

the PTAT current source (24) is configured to generate the first current signal having a magnitude that changes with temperature; the constant current source (25) is configured to generate a second current source having a constant magnitude;

an output end of the PTAT current source (24) is connected to an input end of the first temperature sensing circuit (11,21); and

an output end of the constant current source (25) is connected to an input end of the second temperature sensing circuit (12,22).

4. The circuit for temperature measurement according to claim 3, wherein the first temperature sensing circuit (11,21) comprises a first ring oscillator (211), and the second temperature sensing circuit (12,22) comprises a second ring oscillator (221);

a signal input end of the first ring oscillator (211) is connected to the output end of the PTAT current source (24); and
a signal input end of the second ring oscillator (221) is connected to the output end of the constant current source (25).

5. The circuit for temperature measurement according to claim 4, wherein the first measurement signal is a first periodic oscillation signal generated by the first ring oscillator (211) according to the first current signal;

the second measurement signal is a second periodic oscillation signal generated by the second ring oscillator (221) according to the second current signal; the first characteristic parameter is a first oscillation frequency, and the second characteristic parameter is a second oscillation frequency; and

the data processing unit (13,23) is configured to determine the present temperature according to a first oscillation frequency of the first periodic oscillation signal and a second oscillation frequency of the second periodic oscillation signal.

6. The circuit for temperature measurement according to claim 4, wherein the first ring oscillator (211) and the second ring oscillator (221) each comprise an odd number of phase inverters.

7. The circuit for temperature measurement according to claim 6, wherein the first ring oscillator (211) and the second ring oscillator (221) each comprise an equal number of phase inverters.

8. The circuit for temperature measurement according to claim 1, wherein the second temperature sensing circuit (12,22) is a mirror circuit of the first temperature sensing circuit (11,21).

9. A method for temperature measurement, being configured for a data processing unit (13,23) in the circuit for temperature measurement according to any one of claims 1-8, wherein the circuit for temperature measurement comprises a first temperature sensing circuit (11,21) and a second temperature sensing circuit (12,22), and the method comprises:

receiving a first measurement signal output from the first temperature sensing circuit (11,21) and a second measurement signal output from the second temperature sensing circuit (12,22), wherein an input signal to the first temperature sensing circuit (11,21) is a first current signal, and a magnitude of the first current signal is correlated to temperature; and an input signal to the second temperature sensing circuit (12,22) is a second current signal, and the second current signal is independent of temperature;
extracting a first characteristic parameter corresponding to the first measurement signal and a second characteristic parameter corresponding to the second measurement signal; and
determining a present temperature of an environment where the circuit for temperature measurement is located according to the first characteristic parameter and the second characteristic parameter.

10. The method for temperature measurement according to claim 9, wherein the first measurement signal is correlated to temperature and the circuit parameter of the first temperature sensing circuit (11,21); and
the second measurement signal is correlated to the circuit parameter of the second temperature sensing circuit (12,22).

11. The method for temperature measurement according to claim 9, the circuit for temperature measurement further comprising a proportional to absolute temperature, PTAT, current source (24) and a constant current source (25), wherein

the PTAT current source (24) is configured to generate the first current signal having a magnitude that changes with temperature; the constant current source (25) is configured to generate a second current source having a constant magnitude;
an output end of the PTAT current source (24) is connected to an input end of the first temperature sensing circuit (11,21); and
an output end of the constant current source (25) is connected to an input end of the second temperature sensing circuit (12,22).

12. The method for temperature measurement according to claim 11, wherein the constant current source (25) is composed of the PTAT current source (24) and complementary to absolute temperature circuit.

13. The method for temperature measurement according to claim 11, wherein the first temperature sensing circuit (11,21) comprises a first ring oscillator (211), and the second temperature sensing circuit (12,22) comprises a second ring oscillator (221);

a signal input end of the first ring oscillator (211) is connected to the output end of the PTAT current source (24); and
a signal input end of the second ring oscillator (221) is connected to the output end of the constant current source (25).

14. The method according to claim 9, wherein the circuit for temperature measurement comprises a proportional to absolute temperature, PTAT, current source (24) and a constant current source (25); the first temperature sensing circuit (11,21) comprises a first ring oscillator (211), and the second temperature sensing circuit (12,22) comprises a second ring oscillator (221); a signal input end of the first ring oscillator (211) is connected to an output end of the PTAT current source (24); a signal input end of the second ring oscillator (221) is connected to an output end of the constant current source (25); the first measurement signal is a first periodic oscillation signal, and the second measurement signal is a second periodic oscillation signal;
extracting the first characteristic parameter corresponding to the first measurement signal and the second characteristic parameter corresponding to the second measurement signal comprises:

extracting a first oscillation frequency as the first characteristic parameter from the first periodic oscillation signal and a second oscillation frequency as the second characteristic parameter from the second periodic oscillation signal; and

determining the present temperature of the environment where the circuit for temperature measurement is located according to the first characteristic parameter and the second characteristic parameter comprises:

extracting part of characteristic parameters only correlated to temperature from the first characteristic parameter according to the second characteristic parameter; and

determining the present temperature according to the part of characteristic parameters only correlated to temperature.

## Patentansprüche

1. Schaltung (10, 20) zur Temperaturmessung, die Folgendes umfasst: eine erste Temperaturerfassungsschaltung (11, 21), eine zweite Temperaturerfassungsschaltung (12, 22) und eine Datenverarbeitungseinheit,

   wobei die erste Temperaturerfassungsschaltung (11, 21) dazu konfiguriert ist, ein erstes Messsignal zum Darstellen der Temperatur gemäß einem ersten Stromsignaleingang zu erzeugen, und wobei eine Größe des ersten Stromsignals mit der Temperatur korreliert wird;

   wobei die zweite Temperaturerfassungsschaltung dazu konfiguriert ist, ein zweites Messsignal zum Darstellen der Temperatur gemäß einem zweiten Stromsignaleingang erzeugt, und wobei das zweite Stromsignal unabhängig von der Temperatur ist;

   wobei sowohl ein Ausgangsende der ersten Temperaturerfassungsschaltung (11, 21) als auch ein Ausgangsende der zweiten Temperaturerfassungsschaltung (12, 22) mit einem Eingangsende der Datenverarbeitungseinheit (13, 23) verbunden sind; und

   wobei die Datenverarbeitungseinheit (13, 23) dazu konfiguriert ist, eine aktuelle Temperatur gemäß einem ersten charakteristischen Parameter, der dem ersten Messsignal entspricht, und einem zweiten charakteristischen Parameter, der dem zweiten Messsignal entspricht, zu bestimmen, wobei

   ein Schaltungsparameter der ersten Temperaturerfassungsschaltung (11, 21) gleich ist wie ein Schaltungsparameter der zweiten Temperaturerfassungsschaltung (12, 22),

   wobei die Schaltung weiter eine Konstantstromquelle (25) umfasst und die Konstantstromquelle (25) aus einer zur absoluten Temperatur proportionalen, PTAT, Stromquelle (24) und einer zur absoluten Temperatur komplementären, CTAT, Schaltung besteht und die PTAT-Stromquelle (24) das erste Stromsignal ausgibt und die CTAT-Schaltung ein Kalibrierungsstromsignal ausgibt und dem Kalibrierungsstromsignal und dem ersten Stromsignal eine erste Gewichtung bzw. eine zweite Gewichtung zugewiesen sind und das zweite Stromsignal gemäß einem Produkt aus einem Kalibrierungssignal und der ersten Gewichtung und einem Produkt aus dem ersten Stromsignal und der zweiten Gewichtung bestimmt wird.

2. Schaltung zur Temperaturmessung nach Anspruch 1, wobei das erste Messsignal mit der Temperatur und dem Schaltungsparameter der ersten Temperaturerfassungsschaltung (11, 21) korreliert wird; und

   das zweite Messsignal mit dem Schaltungsparameter der zweiten Temperaturerfassungsschaltung (12, 22) korreliert wird.

3. Schaltung zur Temperaturmessung nach Anspruch 1, wobei

   die PTAT-Stromquelle (24) dazu konfiguriert ist, das erste Stromsignal zu erzeugen, das eine sich mit der Temperatur ändernde Größe aufweist; die Konstantstromquelle (25) dazu konfiguriert ist, eine zweite Stromquelle zu erzeugen, die eine konstante Größe aufweist;

   ein Ausgangsende der PTAT-Stromquelle (24) mit einem Eingangsende der ersten Temperaturerfassungsschaltung (11, 21) verbunden ist; und

   ein Ausgangsende der Konstantstromquelle (25) mit einem Eingangsende der zweiten Temperaturerfassungsschaltung (12, 22) verbunden ist.

4. Schaltung zur Temperaturmessung nach Anspruch 3, wobei die erste Temperaturerfassungsschaltung (11, 21) einen ersten Ringoszillator (211) umfasst und die zweite Temperaturerfassungsschaltung (12, 22) einen zweiten Ringoszillator (221) umfasst;

   ein Signaleingangsende des ersten Ringoszillators (211) mit dem Ausgangsende der PTAT-Stromquelle (24) verbunden ist; und

ein Signaleingangsende des zweiten Ringoszillators (221) mit dem Ausgangsende der Konstantstromquelle (25) verbunden ist.

5. Schaltung zur Temperaturmessung nach Anspruch 4, wobei das erste Messsignal ein erstes periodisches Schwingungssignal ist, das vom ersten Ringoszillator (211) gemäß dem ersten Stromsignal erzeugt wird;

das zweite Messsignal ein zweites periodisches Schwingungssignal ist, das vom zweiten Ringoszillator (221) gemäß dem zweiten Stromsignal erzeugt wird; der erste charakteristische Parameter eine erste Schwingungsfrequenz ist und der zweite charakteristische Parameter eine zweite Schwingungsfrequenz ist; und die Datenverarbeitungseinheit (13, 23) dazu konfiguriert ist, die aktuelle Temperatur gemäß einer ersten Schwingungsfrequenz des ersten periodischen Schwingungssignals und einer zweiten Schwingungsfrequenz des zweiten periodischen Schwingungssignals zu bestimmen.

6. Schaltung zur Temperaturmessung nach Anspruch 4, wobei der erste Ringoszillator (211) und der zweite Ringoszillator (221) jeweils eine ungleiche Anzahl von Phaseninvertern umfassen.

7. Schaltung zur Temperaturmessung nach Anspruch 6, wobei der erste Ringoszillator (211) und der zweite Ringoszillator (221) jeweils eine gleiche Anzahl von Phaseninvertern umfassen.

8. Schaltung zur Temperaturmessung nach Anspruch 1, wobei die zweite Temperaturerfassungsschaltung (12, 22) eine Spiegelschaltung der ersten Temperaturerfassungsschaltung (11, 21) ist.

9. Verfahren zur Temperaturmessung, das für eine Datenverarbeitungseinheit (13, 23) in der Schaltung zur Temperaturmessung nach einem der Ansprüche 1-8 konfiguriert ist, wobei die Schaltung zur Temperaturmessung eine erste Temperaturerfassungsschaltung (11, 21) und eine zweite Temperaturerfassungsschaltung (12, 22) umfasst, und das Verfahren Folgendes umfasst:

Empfangen eines ersten Messsignals, das von der ersten Temperaturerfassungsschaltung (11, 21) ausgegeben wird, und eines zweiten Messsignals, das von der zweiten Temperaturerfassungsschaltung (12, 22) ausgegeben wird, wobei ein Eingangssignal der ersten Temperaturerfassungsschaltung (11, 21) ein erstes Stromsignal ist und eine Größe des ersten Stromsignals mit der Temperatur korreliert wird; und ein Eingangssignal der zweiten Temperaturerfassungsschaltung (12, 22) ein zweites Stromsignal ist und das zweite Stromsignal unabhängig von der Temperatur ist;
Extrahieren eines ersten charakteristischen Parameters, der dem ersten Messsignal entspricht, und eines zweiten charakteristischen Parameters, der dem zweiten Messsignal entspricht; und
Bestimmen einer aktuellen Temperatur einer Umgebung, in der sich die Schaltung zur Temperaturmessung befindet, gemäß dem ersten charakteristischen Parameter und dem zweiten charakteristischen Parameter.

10. Verfahren zur Temperaturmessung nach Anspruch 9, wobei das erste Messsignal mit der Temperatur und dem Schaltungsparameter der ersten Temperaturerfassungsschaltung (11, 21) korreliert wird; und das zweite Messsignal mit dem Schaltungsparameter der zweiten Temperaturerfassungsschaltung (12, 22) korreliert wird.

11. Verfahren zur Temperaturmessung nach Anspruch 9, wobei die Schaltung zur Temperaturmessung weiter eine zur absoluten Temperatur proportionale, PTAT, Stromquelle (24) und eine Konstantstromquelle (25) umfasst, wobei

die PTAT-Stromquelle (24) dazu konfiguriert ist, das erste Stromsignal zu erzeugen, das eine sich mit der Temperatur ändernde Größe aufweist; die Konstantstromquelle (25) dazu konfiguriert ist, eine zweite Stromquelle zu erzeugen, die eine konstante Größe aufweist;
ein Ausgangsende der PTAT-Stromquelle (24) mit einem Eingangsende der ersten Temperaturerfassungsschaltung (11, 21) verbunden ist; und
ein Ausgangsende der Konstantstromquelle (25) mit einem Eingangsende der zweiten Temperaturerfassungsschaltung (12, 22) verbunden ist.

12. Verfahren zur Temperaturmessung nach Anspruch 11, wobei die Konstantstromquelle (25) aus der PTAT-Stromquelle (24) und der zur absoluten Temperatur komplementären Schaltung besteht.

13. Verfahren zur Temperaturmessung nach Anspruch 11, wobei die erste Temperaturerfassungsschaltung (11, 21) einen ersten Ringoszillator (211) umfasst und die zweite Temperaturerfassungsschaltung (12, 22) einen zweiten Ringoszillator (221) umfasst;

ein Signaleingangsende des ersten Ringoszillators (211) mit dem Ausgangsende der PTAT-Stromquelle (24) verbunden ist; und
ein Signaleingangsende des zweiten Ringoszillators (221) mit dem Ausgangsende der Konstantstromquelle (25) verbunden ist.

14. Verfahren nach Anspruch 9, wobei die Schaltung zur Temperaturmessung eine zur absoluten Temperatur proportionale, PTAT, Stromquelle (24) und eine Konstantstromquelle (25) umfasst; die erste Temperaturerfassungsschaltung (11, 21) einen ersten Ringoszillator (211) umfasst und die zweite Temperaturerfassungsschaltung (12, 22) einen zweiten Ringoszillator (221) umfasst; ein Signaleingangsende des ersten Ringoszillators (211) mit einem Ausgangsende der PTAT-Stromquelle (24) verbunden ist; ein Signaleingangsende des zweiten Ringoszillators (221) mit einem Ausgangsende der Konstantstromquelle (25) verbunden ist; das erste Messsignal ein erstes periodisches Schwingungssignal ist und das zweite Messsignal ein zweites periodisches Schwingungssignal ist;
Extrahieren des ersten charakteristischen Parameters, der dem ersten Messsignal entspricht, und des zweiten charakteristischen Parameters, der dem zweiten Messsignal entspricht, Folgendes umfasst:

Extrahieren einer ersten Schwingungsfrequenz als den ersten charakteristischen Parameter aus dem ersten periodischen Schwingungssignal und einer zweiten Schwingungsfrequenz als den zweiten charakteristischen Parameter aus dem zweiten periodischen Schwingungssignal; und
Bestimmen der aktuellen Temperatur der Umgebung, in der sich die Schaltung zur Temperaturmessung befindet, gemäß dem ersten charakteristischen Parameter und dem zweiten charakteristischen Parameter, Folgendes umfasst:

Extrahieren eines Teils der charakteristischen Parameter, die nur mit der Temperatur korreliert sind, aus dem ersten charakteristischen Parameter gemäß dem zweiten charakteristischen Parameter; und
Bestimmen der aktuellen Temperatur gemäß dem Teil charakteristischer Parameter, der nur mit der Temperatur korreliert.

## Revendications

1. Circuit (10, 20) de mesure de température, comprenant : un premier circuit de détection de température (11, 21), un second circuit de détection de température (12,22) et une unité de traitement de données,

le premier circuit de détection de température (11, 21) est configuré pour générer un premier signal de mesure pour représenter une température selon une première entrée de signal de courant, et une amplitude du premier signal de courant est corrélée à la température ;
le second circuit de détection de température est configuré pour générer un second signal de mesure pour représenter une température selon une seconde entrée de signal de courant, et le second signal de courant est indépendant de la température ;
une extrémité de sortie du premier circuit de détection de température (11, 21) et une extrémité de sortie du second circuit de détection de température (12, 22) sont toutes deux raccordées à une extrémité d'entrée de l'unité de traitement de données (13, 23) ; et
l'unité de traitement de données (13, 23) est configurée pour déterminer une température actuelle selon un premier paramètre caractéristique correspondant au premier signal de mesure et un second paramètre caractéristique correspondant au second signal de mesure, dans lequel
un paramètre de circuit du premier circuit de détection de température (11, 21) est le même qu'un paramètre de circuit du second circuit de détection de température (12, 22),
dans lequel le circuit comprend en outre une source de courant constant (25) et la source de courant constant (25) est composée d'une source de courant proportionnelle à la température absolue, PTAT, (24) et d'un circuit complémentaire à la température absolue, CTAT, et la source de courant PTAT (24) émet le premier signal de courant, et le circuit CTAT émet un signal de courant d'étalonnage, et un premier poids et un second poids sont attribués respectivement au signal de courant d'étalonnage et au premier signal de courant, et le second signal de courant est déterminé selon un produit d'un signal d'étalonnage et le premier poids et un produit du premier signal de courant et du second poids.

**2.** Circuit de mesure de température selon la revendication 1, dans lequel le premier signal de mesure est corrélé à la température et au paramètre de circuit du premier circuit de détection de température (11, 21) ; et
le second signal de mesure est corrélé au paramètre de circuit du second circuit de détection de température (12, 22).

**3.** Circuit de mesure de température selon la revendication 1, dans lequel

la source de courant PTAT (24) est configurée pour générer le premier signal de courant présentant une amplitude qui change avec la température ; la source de courant constant (25) est configurée pour générer une seconde source de courant présentant une amplitude constante ;
une extrémité de sortie de la source de courant PTAT (24) est raccordée à une extrémité d'entrée du premier circuit de détection de température (11, 21) ; et
une extrémité de sortie de la source de courant constant (25) est raccordée à une extrémité d'entrée du second circuit de détection de température (12, 22).

**4.** Circuit de mesure de température selon la revendication 3, dans lequel le premier circuit de détection de température (11, 21) comprend un premier oscillateur en anneau (211), et le second circuit de détection de température (12, 22) comprend un second oscillateur en anneau (221) ;

une extrémité d'entrée de signal du premier oscillateur en anneau (211) est raccordée à l'extrémité de sortie de la source de courant PTAT (24) ; et
une extrémité d'entrée de signal du second oscillateur en anneau (221) est raccordée à l'extrémité de sortie de la source de courant constant (25).

**5.** Circuit de mesure de température selon la revendication 4, dans lequel le premier signal de mesure est un premier signal d'oscillation périodique généré par le premier oscillateur en anneau (211) selon le premier signal de courant ;

le second signal de mesure est un second signal d'oscillation périodique généré par le second oscillateur en anneau (221) selon le second signal de courant ; le premier paramètre caractéristique est une première fréquence d'oscillation et le second paramètre caractéristique est une seconde fréquence d'oscillation ; et
l'unité de traitement de données (13, 23) est configurée pour déterminer la température actuelle selon une première fréquence d'oscillation du premier signal d'oscillation périodique et une seconde fréquence d'oscillation du second signal d'oscillation périodique.

**6.** Circuit de mesure de température selon la revendication 4, dans lequel le premier oscillateur en anneau (211) et le second oscillateur en anneau (221) comprennent chacun un nombre impair d'inverseurs de phase.

**7.** Circuit de mesure de température selon la revendication 6, dans lequel le premier oscillateur en anneau (211) et le second oscillateur en anneau (221) comprennent chacun un nombre pair d'inverseurs de phase.

**8.** Circuit de mesure de température selon la revendication 1, dans lequel le second circuit de détection de température (12, 22) est un circuit miroir du premier circuit de détection de température (11, 21).

**9.** Procédé de mesure de température, qui est configuré pour une unité de traitement de données (13, 23) dans le circuit de mesure de température selon l'une quelconque des revendications 1-8, dans lequel le circuit de mesure de température comprend un premier circuit de détection de température (11, 21) et un second circuit de détection de température (12, 22), et le procédé comprend :

la réception d'un premier signal de mesure émis par le premier circuit de détection de température (11, 21) et d'un second signal de mesure émis par le second circuit de détection de température (12, 22), dans lequel un signal d'entrée du premier circuit de détection de température (11, 21) est un premier signal de courant, et une amplitude du premier signal de courant est corrélée à la température ; et un signal d'entrée du second circuit de détection de température (12, 22) est un second signal de courant, et le second signal de courant est indépendant de la température ;
l'extraction d'un premier paramètre caractéristique correspondant au premier signal de mesure et d'un second paramètre caractéristique correspondant au second signal de mesure ; et
la détermination d'une température actuelle d'un environnement dans lequel le circuit de mesure de température se trouve, selon le premier paramètre caractéristique et le second paramètre caractéristique.

**10.** Procédé de mesure de température selon la revendication 9, dans lequel le premier signal de mesure est corrélé à la température et au paramètre de circuit du premier circuit de détection de température (11, 21) ; et
le second signal de mesure est corrélé au paramètre de circuit du second circuit de détection de température (12, 22).

**11.** Procédé de mesure de température selon la revendication 9, le circuit de mesure de température comprenant en outre une source de courant proportionnelle à la température absolue (PTAT) (24) et une source de courant constant (25), dans lequel

la source de courant PTAT (24) est configurée pour générer le premier signal de courant présentant une amplitude qui change avec la température ; la source de courant constant (25) est configurée pour générer une seconde source de courant présentant une amplitude constante ;
une extrémité de sortie de la source de courant PTAT (24) est raccordée à une extrémité d'entrée du premier circuit de détection de température (11, 21) ; et
une extrémité de sortie de la source de courant constant (25) est raccordée à une extrémité d'entrée du second circuit de détection de température (12, 22).

**12.** Procédé de mesure de température selon la revendication 11, dans lequel la source de courant constant (25) est composée de la source de courant PTAT (24) et complémentaire au circuit de température absolue.

**13.** Procédé de mesure de température selon la revendication 11, dans lequel le premier circuit de détection de température (11, 21) comprend un premier oscillateur en anneau (211) et le second circuit de détection de température (12, 22) comprend un second oscillateur en anneau (221) ;

une extrémité d'entrée de signal du premier oscillateur en anneau (211) est raccordée à l'extrémité de sortie de la source de courant PTAT (24) ; et
une extrémité d'entrée de signal du second oscillateur annulaire (221) est raccordée à l'extrémité de sortie de la source de courant constant (25).

**14.** Procédé selon la revendication 9, dans lequel le circuit de mesure de température comprend une source de courant proportionnelle à la température absolue (PTAT) (24) et une source de courant constant (25) ; le premier circuit de détection de température (11, 21) comprend un premier oscillateur en anneau (211) et le second circuit de détection de température (12, 22) comprend un second oscillateur en anneau (221) ; une extrémité d'entrée de signal du premier oscillateur en anneau (211) est raccordée à une extrémité de sortie de la source de courant PTAT (24) ; une extrémité d'entrée de signal du second oscillateur en anneau (221) est raccordée à une extrémité de sortie de la source de courant constant (25) ; le premier signal de mesure est un premier signal d'oscillation périodique et le second signal de mesure est un second signal d'oscillation périodique ;
l'extraction du premier paramètre caractéristique correspondant au premier signal de mesure et du second paramètre caractéristique correspondant au second signal de mesure comprend :

l'extraction d'une première fréquence d'oscillation comme premier paramètre caractéristique du premier signal d'oscillation périodique et d'une seconde fréquence d'oscillation comme second paramètre caractéristique du second signal d'oscillation périodique ; et
la détermination de la température actuelle de l'environnement dans lequel le circuit de mesure de température se trouve, selon le premier paramètre caractéristique et le second paramètre caractéristique comprend :

l'extraction d'une partie des paramètres caractéristiques uniquement corrélée à la température à partir du premier paramètre caractéristique selon le second paramètre caractéristique ; et
la détermination de la température actuelle selon la partie des paramètres caractéristiques uniquement corrélée à la température.

Fig. 1

Fig. 2

Receive a first measurement signal output from a first temperature sensing circuit and a second measurement signal output from a second temperature sensing circuit 301

Extract a first characteristic parameter corresponding to the first measurement signal and a second characteristic parameter corresponding to the second measurement signal 302

Determine a present temperature of an environment where a circuit for temperature measurement is located according to the first feature parameter and the second feature parameter 303

Fig. 3

**EP 4 321 848 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120140792 A1